# EUROPÄISCHE PATENTSCHRIFT

(11) **EP 2 454 128 B1**
(45) Veröffentlichungstag und Bekanntmachung des Hinweises auf die Patenterteilung: **21.12.2016**
(21) Anmeldenummer: 10734690.0
(22) Anmeldetag: 14.07.2010
(51) Int. Cl.: B60R 21/237

(54) **VERFAHREN ZUR FALTUNG EINES GASSACKES FÜR EIN AIRBAGMODUL FÜR EIN KRAFTFAHRZEUG, EIN AIRBAGMODUL UND EINE VORRICHTUNG ZUR FALTUNG EINES GASSACKES FÜR EIN AIRBAGMODUL**
METHOD FOR FOLDING A MOTOR VEHICLE AIRBAG, AIRBAG MODULE AND MODULE AIRBAG FOLDING DEVICE
PROCÉDÉ DE PLIAGE D'UN AIRBAG DE VÉHICULE À MOTEUR, MODULE D'AIRBAG ET DISPOSITIF DE PLIAGE D'UN AIRBAG POUR CE MODULE

(30) Priorität: 16.07.2009 DE 102009033561
(43) Veröffentlichungstag der Anmeldung: 23.05.2012
(73) Patentinhaber: Autoliv Development AB, 447 83 Vårgårda (SE)
(72) Erfinder: NEBEL, Raimund, 86836 Obermeitingen (DE); ADOLPH, Oliver, DE-85241 Hebertshausen (DE); MACKENSEN, Jürgen, 85221 Dachau (DE)
(74) Vertreter: Müller Verweyen
(86) Internationale Anmeldenummer: PCT/EP2010/004289
(87) Internationale Veröffentlichungsnummer: WO 2011/006647

(56) Entgegenhaltungen:
- EP-A1- 0 712 761
- EP-A2- 1 031 473
- EP-B1- 1 127 752
- DE-A1- 19 845 721
- DE-C2- 19 535 564
- JP-A- 11 240 402

## Beschreibung

Die Erfindung betrifft ein Verfahren zur Faltung eines Gassackes für ein Airbagmodul für ein Kraftfahrzeug.

Der Gassack ist in dem Airbagmodul im Allgemeinen in einem Gehäuse angeordnet, in das er direkt hineingefaltet wird. Nach der Faltung muss der Gassack dauerhaft fixiert werden, da er sich ansonsten vor der Anbringung der Gehäuseabdeckung wieder entfalten würde.

Eine andere Methode sieht vor, dass der Gassack zunächst gefaltet wird und anschließend durch einen geeigneten Gewebestreifen vorfixiert wird. Der vorfixierte Gassack kann dann in dem Gehäuse angeordnet werden, ohne dass dabei die Gefahr besteht, dass er sich während des Zusammenbaus des Airbagmoduls wieder entfaltet. Nachteilig bei dieser Methode ist es jedoch, dass sich der Gassack anschließend zwischen den Gewebestreifen wieder nach außen entfalten kann, sofern er nicht vollständig von den Gewebestreifen umfasst ist, was wiederum sehr teuer wäre.

Aus der EP 1 127 752 B1 ist ein Verfahren bekannt, bei dem der Gassack zunächst gefaltet wird, anschließend erwärmt wird und dann unter gleichzeitiger Abkühlung gepresst wird. Aufgrund des Pressens des Gassackes unter gleichzeitiger Abkühlung soll die Faltung des Gassackes anschließend für eine gewisse Zeit bestehen bleiben, ohne dass eine gesonderte Fixierung erforderlich ist. Nachteilig bei diesem Verfahren ist es jedoch, dass die Faltung eben nur für eine begrenzte Zeit bestehen bleibt, innerhalb derer der gefaltete Gassack in dem Airbagmodul angeordnet werden muss.

Aufgabe der Erfindung ist es, ein Verfahren zur Faltung eines Gassackes zu schaffen, welches eine verbesserte Formstabilität des gefalteten Gassackes ermöglicht.

Zur Lösung der Aufgabe wird erfindungsgemäß ein Verfahren nach Anspruch 1 vorgeschlagen. Weitere bevorzugte Ausführungsformen der Erfindung sind den Unteransprüchen, der Beschreibung und den zugehörigen Figuren zu entnehmen.

Nach Anspruch 1 wird zur Lösung der Aufgabe ein Verfahren mit folgenden Schritten vorgeschlagen:
- Falten des Gassackes zunächst auf ein Maß, das größer als das vorgesehene Sollmaß zum Einbau in ein Airbaggehäuse ist,
- Beaufschlagen des Gassackes mit Feuchtigkeit
- Pressen des Gassackes und gleichzeitiges Entweichen der Feuchtigkeit aus dem Gassack, wobei
- der Gassack beim Pressen auf ein Maß gleich oder kleiner als das vorgesehene Sollmaß gepresst wird.

Die in den Gassack eingebrachte Feuchtigkeit bewirkt eine Befeuchtung des Gassackes, der dann nach dem Pressen und dem Entweichen der Feuchtigkeit seine durch das Pressen vorgegebene Form wesentlich besser beibehält, als dies ohne Feuchtigkeit der Fall wäre. Ein ähnlicher Effekt tritt z.B. bei einem Dampfbügeleisen ein, bei dem das Gewebe mit Dampf beaufschlagt wird, der anschließend durch die Erhitzung über die heiße Bügelfläche des Bügeleisens dem Gewebe wieder entzogen wird. Ferner hat sich herausgestellt, dass sich der Gassack dadurch auf ein wesentlich kleineres Maß zusammenpressen lässt, als dies mit einem herkömmlichen Faltverfahren möglich ist.

Das Entziehen der Feuchtigkeit aus dem Gassack kann weiter beschleunigt und intensiviert werden, indem dieser mit trockener Druckluft und/oder mit einem Unterdruck oder sogar Vakuum beaufschlagt wird. Die trockene Druckluft bewirkt, dass die nötige Menge an Luft zur Aufnahme der Feuchtigkeit vorhanden ist, während der Unterdruck oder das Vakuum das Verdampfen der Feuchtigkeit auch bei niedrigeren Temperaturen ermöglicht bzw. unterstützt. Idealerweise wird der Gassack zuerst mit der trockenen Druckluft und anschließend mit dem Unterdruck oder dem Vakuum beaufschlagt, wodurch die Feuchtigkeit dem Gassack in kürzester Zeit entzogen wird.

Die Feuchtigkeit wird nach dem Falten des Gassackes in der Aufnahme eingebracht, der zu diesem Zeitpunkt auf ein größeres als zum Einbau vorgesehenes Maß gefaltet ist. Anschließend erfolgt das Pressen des Gassackes auf das Sollmaß oder ein Maß kleiner als das Sollmaß. Durch das Pressen wird nicht nur die Form verkleinert, sondern zusätzlich die Feuchtigkeit aus dem Gassack gepresst. Die anschließend nach dem Erreichen des endgültigen Maßes noch zu entziehende Menge an Feuchtigkeit aus dem Gassack ist dadurch entsprechend geringer. Ferner lässt sich der Gassack dadurch wesentlich einfacher in dem Airbaggehäuse anordnen.

Weiter wird vorgeschlagen, dass die Feuchtigkeit dampfförmig ist, wodurch die Feuchtigkeit den Gassack bestmöglich durchdringen kann, wobei die Menge an Feuchtigkeit, welche in den Gassack eingebracht wird und anschließend wieder abgeführt werden muss, gering gehalten werden kann.

Ferner kann durch das erfindungsgemäße Verfahren ein Airbagmodul geschaffen werden, bei dem der Gassack nach einem der vorgeschlagenen Verfahren gefaltet formstabil in dem Airbagmodul angeordnet ist. Aufgrund des vorgeschlagenen Verfahrens kann der Gassack selbst auf ein kleineres Maß gepresst werden, so dass das Airbagmodul kleiner ausgeführt werden kann als mit einem nach einem herkömmlichen Faltverfahren gefalteten Gassack. Ferner ist der Gassack nach dem Pressen wesentlich formstabiler, so dass der Druck auf die Abdeckung des Airbagmoduls aufgrund einer möglichen Ausdehnung des Gassackes wesentlich geringer oder sogar nicht mehr vorhanden ist. Dadurch ist die Wahrscheinlichkeit, dass die Aufreißlinie des Airbagmoduls sichtbar wird, vermindert. Außerdem ergeben sich dadurch eine wesentlich verbesserte Handhabbarkeit des Gassackes bei dem Zusammenbau des Airbagmoduls und reduzierte Montagekräfte an der Montagelinie. Außerdem sind keine besonderen Zusatzeinrichtungen erforderlich, um den Gassack während des Zusammenbaus des

Airbagmoduls in diesem zu halten. Ferner können die Seitenwände des Airbagmoduls, insbesondere die Seitenwände des zur Aufnahme des Gassackes vorgesehenen Gehäuses, niedriger ausgeführt werden, da der Gassack aufgrund der verbesserten Formstabilität sich auch in diesem Fall nicht über die Seitenwände hinweg ausdehnen kann. Ferner bietet die verbesserte Formstabilität des Gassackes den Vorteil, dass die Faltstation auch außerhalb der Montagelinie angeordnet werden kann und dadurch für mehrere verschiedene Airbagmodule verwendet werden kann.

Weiter wird vorgeschlagen, dass keine zusätzlichen Hilfsmittel zur Formstabilisierung des Gassackes vorgesehen sind. Dies ist insofern von Vorteil, da der Entfaltungsvorgang dadurch nicht durch die zusätzlichen Hilfsmittel gestört werden kann, und das Airbagmodul insgesamt kostengünstiger herzustellen und zusammenzubauen ist.

Weiter wird eine Vorrichtung geschaffen, welche in den Wänden einer zur Aufnahme des Gassackes während der Faltung vorgesehenen Aufnahme und/oder in dem Schieberwerkzeug Öffnungen aufweist, durch die der Gassack in der Aufnahme mit Feuchtigkeit beaufschlagbar ist. Aufgrund der Öffnungen kann der Gassack in der Aufnahme gleichzeitig mit Feuchtigkeit beaufschlagt und zusammengepresst werden, so dass beide Schritte in ein und derselben Vorrichtung vorgenommen werden können. Insbesondere kann das Beaufschlagen mit der Feuchtigkeit unmittelbar vor dem Pressen oder sogar zeitgleich mit dem Pressen erfolgen, so dass die Zeit zum Pressen des Gassackes verkürzt werden kann. Ein weiterer Vorteil ist darin zu sehen, dass die Feuchtigkeit dadurch vor dem Pressen nicht entweichen oder abkühlen kann, und der Effekt der Formstabilisierung des Gassackes nach dem Pressen besonders wirkungsvoll eintritt.

Außerdem kann die Aufnahme mit einem Unterdruck vorzugsweise mit einem Vakuum beaufschlagbar sein. Durch den Unterdruck wird die Feuchtigkeit dem Gassack noch schneller entzogen, indem zum einen die Feuchtigkeit mit der Luft abgesaugt wird und zum anderen durch den Unterdruck das Verdampfen von eventuell noch vorhandener Restfeuchte unterstützt wird.

Weiter wird vorgeschlagen, dass die Aufnahme mit trockener Druckluft beaufschlagbar ist, so dass die zur Verfügung stehende Menge an Luft zur Aufnahme der Feuchtigkeit erhöht wird.

Ferner kann die Aufnahme durch einen Airbagcontainer oder eine Abdeckkappe eines Airbagcontainers oder eines Airbagmoduls gebildet sein, so dass der Gassack nach dem Falten bereits montagefreundlich und zusätzlich formstabilisiert in einem dem Airbagmodul zugeordneten Teil angeordnet ist.

Nachfolgend wird die Erfindung anhand einer bevorzugten Ausführungsform näher erläutert. In den Figuren sind im Einzelnen zu erkennen:
- Fig.1:: Vorrichtung mit einem in einer Aufnahme gefalteten Gassack vor dem Pressen
- Fig.2:: Vorrichtung mit einem in einer Aufnahme zusammengepressten Gassack

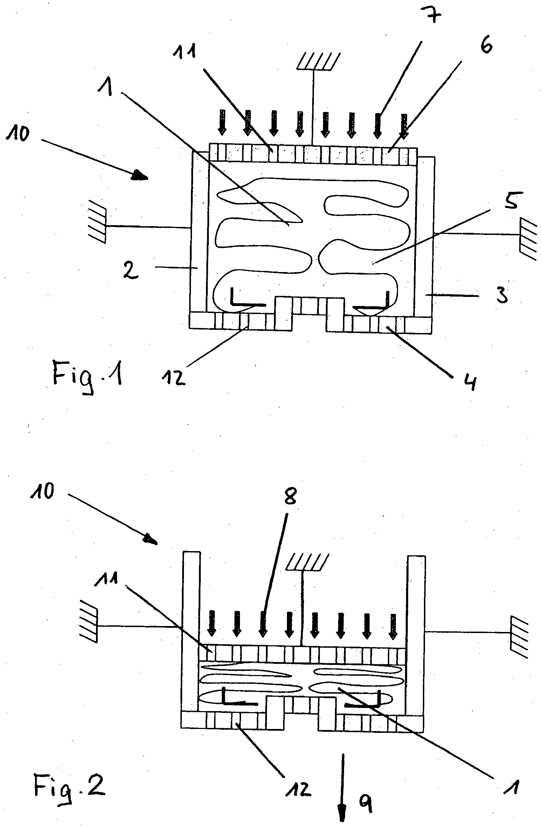

In Fig.1 ist eine erfindungsgemäße Vorrichtung 10 mit einer Aufnahme 5 zu erkennen, in der ein Gassack 1 zusammengefaltet ist. Die Aufnahme 5 ist begrenzt durch die Wände 2,3,4 und ein zwischen den Wänden 2 und 3 verschieblich geführtes Schieberwerkzeug 6. In der Wand 4 und dem Schieberwerkzeug 6 sind jeweils Öffnungen 11 und 12 vorgesehen. Nach dem ersten Schritt des Faltens des Gassackes 1 in die Aufnahme 5 wird nun in einem zweiten Schritt die Aufnahme 5 mit dem darin befindlichen Gassack 1 durch einen erhitzten Dampfstrom 7 durch die Öffnungen 11 mit Dampf beaufschlagt.

Das Schieberwerkzeug 6 wird dann in die Aufnahme 5 hinein in die in Fig.2 dargestellte Stellung verschoben, wodurch der Gassack 1 auf ein Maß kleiner oder gleich dem späteren Sollmaß zusammengepresst wird. Die in der Aufnahme 5 und in dem Gassack 1 befindliche Feuchtigkeit kann während des Verschiebevorganges des Schieberwerkzeuges 6 durch die Öffnungen 12 entweichen. Das Entweichen der Feuchtigkeit ist durch die Pfeilrichtung 9 dargestellt. Anschließend wird zum vollständigen Entzug der Feuchtigkeit die Aufnahme 5 mit dem zusammengepressten Gassack 1 mit trockener Druckluft in Pfeilrichtung 8 beaufschlagt. Die trockene Druckluft hat die Aufgabe, die Feuchtigkeit aufzunehmen, wobei durch den Druck der Luft auch die entsprechende Menge an Luft bereitgestellt wird. In einem nächsten Schritt wird der Druck in der Aufnahme 5 schlagartig abgesenkt, indem die Druckluft abgesaugt wird, wobei dabei auch die Feuchtigkeit abgeführt wird. Das Absaugen ist durch die Pfeilrichtung 9 symbolisch dargestellt.

Nach dem Absaugen der Druckluft ist der Gassack 1 fertig auf ein Maß gleich oder kleiner als das zum Einbau in dem Airbaggehäuse vorgesehene Sollmaß gepresst und durch die erfindungsgemäße Dampfbehandlung in seiner Form stabilisiert. Der Gassack 1 kann in dieser Form der Aufnahme 5 entnommen werden und verändert seine Form anschließend auch über einen längeren Zeitraum nicht mehr. Aufgrund der langfristigen Formstabilisierung kann der Gassack 1 in der zusammengepressten Form auch zwischengelagert oder transportiert werden, ohne dass er sich selbstständig wieder aufweitet. Zusätzliche Hilfsmittel zur Fixierung der Form sind nicht mehr erforderlich.

Zusätzlich kann durch das schlagartige Verdampfen der Feuchtigkeit so viel Verdunstungskälte entstehen, dass die Feuchtigkeit im Inneren des Gassackes 1 gefriert und dadurch zusätzlich zur Stabilisierung der Form beiträgt.

Ein Teil der Feuchtigkeit kann auch durch das Gassackgewebe aufgenommen werden und dort verbleiben, soweit die Sättigungsgrenze nicht überschritten wird.

## Patentansprüche

1. Verfahren zur Faltung eines Gassackes (1) für ein Airbagmodul für ein Kraftfahrzeug mit folgenden Schritten:
- Falten des Gassackes (1) zunächst auf ein Maß, das größer als das vorgesehene Sollmaß zum Einbau in ein Airbaggehäuse ist
- Beaufschlagen des Gassackes (1) mit Feuchtigkeit
- Pressen des Gassackes (1) und gleichzeitiges Entweichender Feuchtigkeit aus dem Gassack, wobei
- der Gassack (1) beim Pressen auf ein Maß gleich oder kleiner als das vorgesehene Sollmaß gepresst wird.

2. Verfahren nach Anspruch 1, **dadurch gekennzeichnet, dass**
- der Gassack (1) während des Pressens mit trockener Druckluft beaufschlagt wird.

3. Verfahren nach einem der vorangegangenen Ansprüche, **dadurch gekennzeichnet, dass**
- der Gassack (1) während des Pressens einem Unterdruck, vorzugsweise einem Vakuum ausgesetzt ist.

4. Verfahren nach einem der vorangegangenen Ansprüche, **dadurch gekennzeichnet, dass**
- die Feuchtigkeit dampfförmig ist.

5. Verfahren nach einem der Ansprüche 1 bis 3, **dadurch gekennzeichnet, dass**
- die Feuchtigkeit flüssig ist.

## Claims

1. Method for folding a gas bag (1) for an airbag module for a motor vehicle with the following steps:
- folding of the gas bag (1) initially to a size that is larger than the envisaged target size for building into an airbag housing
- acting upon the gas bag (1) with moisture
- pressing of the gas bag (1) and simultaneous escape of the moisture from the gas bag, wherein
- on pressing, the gas bag (1) is pressed to a size equal to or smaller than the envisaged target size.

2. Method according to claim 1, **characterised by** that
- the gas bag (1) is acted upon by dry compressed air during pressing.

3. Method according to one of the preceding claims, **characterised by** that
- the gas bag is exposed to a negative pressure, preferably a vacuum, during pressing.

4. Method according to one of the preceding claims, **characterised by** that
- the moisture is in the form of vapour.

5. Method according to one of claims 1 to 3, **characterised by** that
- the moisture is liquid.

## Revendications

1. Procédé de pliage d'un airbag (1) pour un module d'airbag de véhicule à moteur comprenant les étapes suivantes :
- pliage de l'airbag (1) d'abord à une dimension qui est supérieure à la dimension cible prévue pour le montage dans un boîtier d'airbag
- soumission de l'airbag (1) à l'action de l'humidité
- compression de l'airbag (1) et dégagement simultané de l'humidité hors de l'airbag, dans lequel
- lors de la compression, l'airbag (1) est comprimé à une dimension égale ou inférieure à la dimension cible prévue.

2. Procédé selon la revendication 1, **caractérisé en ce que**
- pendant la compression, l'airbag (1) est soumis à l'action d'air comprimé sec.

3. Procédé selon l'une des revendications précédentes, **caractérisé en ce que**
- pendant la compression, l'airbag (1) est exposé à une pression subatmosphérique, de préférence un vide.

4. Procédé selon l'une des revendications précédentes, **caractérisé en ce que**
- l'humidité est à l'état de vapeur.

5. Procédé selon l'une des revendications 1 à 3, **caractérisé en ce que**
- l'humidité est liquide.
